# EUROPEAN PATENT SPECIFICATION

(11) **EP 3 562 687 B1**
(45) Date of publication and mention of the grant of the patent: **26.04.2023**
(21) Application number: 17832991.8
(22) Date of filing: 20.12.2017
(51) Int. Cl.: B60C 1/00, C08L 9/06

(54) **ELASTOMERIC COMPOSITIONS COMPRISING NATURAL RUBBERS FROM GUAYULE FOR TYRE COMPONENTS AND TYRES COMPRISING THE SAME**
ELASTOMERE ZUSAMMENSETZUNGEN MIT NATÜRLICHEM GUMMI AUS GUAYUL FÜR REIFENKOMPONENTEN UND REIFEN DAMIT
COMPOSITIONS ÉLASTOMÈRES COMPRENANT DES CAOUTCHOUCS NATURELS PROVENANT DE GUAYULE POUR DES COMPOSANTS DE PNEU ET PNEUS LES COMPRENANT

(30) Priority: 27.12.2016 IT 201600131325
(43) Date of publication of application: 06.11.2019
(73) Proprietor: Pirelli Tyre S.p.A., 20126 Milano (IT)
(72) Inventor: CASTELLANI, Luca, I-20126 Milano (IT); HANEL, Thomas, I-20126 Milano (IT); DALL'ABACO, Davide, I-20126 Milano (IT); NAPOLITANO, Luca, I-20126 Milano (IT); ALBIZZATI, Enrico, I-20126 Milano (IT)
(74) Representative: PGA S.p.A.
(86) International application number: PCT/IB2017/058202
(87) International publication number: WO 2018/122688

(56) References cited:
- EP-A1- 0 476 640
- WO-A1-97/43349
- WO-A1-2015/070139
- WO-A1-2016/115132
- US-A- 4 568 711
- "Guayule: An Alternative Source of Natural Rubber", 1 January 1977 (1977-01-01), National Academies Press, XP002771850, ISBN: 978-0-309-33429-7 page 48 - page 48

## Description

### FIELD OF THE INVENTION

The present invention relates to new elastomeric compositions for tyres, preferably for high and ultra-high performance (HP and UHP) tyres, characterised by excellent handling and grip on both wet and dry asphalt, even at high temperatures that are reached in sporty driving or in extreme conditions.

These compositions incorporate natural rubbers and resins at least partially replacing those synthetic rubbers and resins of fossil origin typically used and allow producing particularly performing tyres with a lower environmental impact.

### PRIOR ART

High or very high performance tyres, known as HP and UHP (HP high performance - UHP ultra high performance) tyres, with chord measures of for example from 145 mm to 355 mm, must have excellent handling, good balance between adhesion on dry asphalt and wet asphalt and, if possible, maintain these performances constant over time and with the increase in temperature that occurs in extreme driving conditions.

In particular, the elastomeric tread compositions must retain their physical-mechanical properties as much as possible without causing premature ageing and ensuring good resistance to tearing and abrasion.

Generally, in order to meet these requirements, the elastomeric tread compositions comprise synthetic styrene-butadiene (SBR) elastomers since these SBR elastomers, due to the presence of styrenic units, have a higher glass transition temperature, thus imparting greater hysteresis when necessary and, consequently, a better grip on wet and dry asphalt compared to other polydienes, for example with respect to natural rubber. Furthermore SBR elastomers guarantee a better resistance to thermal ageing.

The elastomeric compositions for tyre treads, especially for high performance vehicles, contain among the ingredients, high amounts of resins to impart both adhesiveness during the manufacture of the green tyre and, above all, a better grip of the tread in use.

The incorporation of large amounts of resins into the elastomeric compositions can however be problematic and require complex mixing systems.

The resins typically used to this end are mainly non-natural resins having hydrocarbon origin, therefore coming from non-renewable sources.

There is a growing interest in the tyre sector to replace raw materials from oil with raw materials produced from renewable sources or sustainable materials.

The vulcanised elastomeric compositions used to make tyres may contain varying amounts of natural rubber. Currently, the one most used is obtained, with mainly manual processes, from the Hevea Brasiliensis tree.

Natural rubber is also produced from other plants, in particular from native Mexican shrubs called Guayule (Parthenium argentatum Gray), collected and processed with highly mechanised systems. Advantageously, the Guayule plants are able to grow in desert areas and do not require rich soils, generally obtained by deforestation, as they are necessary for the cultivation of Hevea trees.

The rubber from Guayule is similar to that from Hevea, being essentially made of *cis-*1,4-polyisoprene even if it has a different microstructure but above all contains different non-rubber components, mainly resins, plant residues and minerals.

If not sufficiently purified from the non-rubber components, the Guayule rubber may behave differently from that of Hevea due to the content of these components, as shown by the different chemical-physical properties.

In this regard, depending on the process for obtaining it, Guayule rubber can comprise large amounts of natural resins, mainly terpenic, for example up to 25% by weight, or, if subjected to appropriate separation treatments, it may have a very low residue of non-rubber (resins and others) components, for example in the order of 2.5% or less.

The product containing high levels of resins is easily degraded, therefore to allow a real use of this rubber, processes have been developed above all to obtain the same with a low content of resins or, alternatively, antioxidants have been added.

In document Processing Guayule for latex and bulk rubber" Ind. crops and products 22(2005) 1-47, an overview is presented of the methods of extraction of natural rubber from Guayule by buoyancy or solvent extraction, with the obtainment of tires with different purity levels and by-products such as bagasse and mainly terpenic natural resins.

In book Handbook of Elastomers, Second Edition (2001), by Mclntyre, Stephen, Schloman and Bhowminck, chapter 1 summarises the state of knowledge on rubber from Guayule. On page 13 it is stated that the Guayule rubber, due to the high content of resins (up to 25%), when incorporated in elastomeric tyre compositions and subjected to vulcanisation, undergoes rapid oxidation degradation and, therefore, it is advisable to use deresinised rubbers from Guayule (with a content of less than 5 phr) to avoid these problems.

In Apollo Vredestein's presentation held during the conference *"*2012 Congress: BioRubber for Europe in Global Perspectives", Wageningen, The Netherlands, September 24-25, 2012, it was described the use of natural rubber from Guayule, containing resins, in the preparation of a tread for winter tyres. In a comparative table (slide 13), a Guayule rubber was shown having a dried acetone extract of 12.5% and a Mooney viscosity of 34. The breaking properties and tear strength properties of the composition for winter treads comprising that Guayule rubber were lower than the natural rubber from Hevea (slide 17).

A second Guayule rubber with a 6.5% dry acetone extract is reported on slide 20. The corresponding final elastomeric composition (slide 22) showed a low Mooney viscosity, despite the presence of reinforcing fillers, and unsatisfactory tearing properties.

Patent application US2013/0253088 describes natural rubbers from Guayule containing 2.5 to 4% of resins, which incorporated into tyre compositions suitably modified in the vulcanisation system have good crystallisation properties under stretching.

Patent US4530995 describes a method for preserving Guayule plants before being processed, which comprises mixing the shredded material with at least one organic solvent free from water to give a suspension, kept in the absence of oxygen and in the presence of soluble antioxidants (phenylendiamines). In the examples, extracted natural rubbers having a molecular weight value not exceeding 559,000 g/mole are mentioned.

Patent GB2163752 relates to elastomers, among which also natural rubber from Guayule, stabilised with a synergistic mixture of antioxidants (phenylendiamine and a phosphite). In the text, the degree of the rubber or whether it contains resins or not is not specified.

Patent US4829117 describes thermally stabilising compositions and processes applicable to Guayule plants prior to processing or to the already extracted rubber and resin mixture, characterised by the use of a volatile antioxidant (such as sterically bulky phenols of the BHT or TBX type) and possibly of an inert transport liquid (e.g. PEG) which lowers the boiling point of the antioxidant and facilitates recovery by boiling.

### SUMMARY OF THE INVENTION

The Applicant has set itself the aim of making more environmentally friendly tyres, possibly using natural rubber from Guayule, not only in replacement of the portion of Hevea rubber normally included in the compositions but possibly also at least a part of the synthetic elastomers. Unfortunately, however, general knowledge in this regard were rather discouraging and obtaining elastomeric compositions comprising significant quantities of Guayule rubber which would be suitable for use in the tread of tyres, especially HP or UHP tyres, appeared difficult.

In fact, given the premises, it seemed very difficult to combine these "green" tyres with good handling and controllability on both dry and wet surfaces, while maintaining other important properties such as rolling resistance and wear. Surprisingly, the Applicant has found that by appropriately selecting natural rubber from Guayule, in terms of composition and properties, such as content and type of natural resins, Mooney viscosity and plasticity, it is possible to make elastomeric composition, preferably for tread, which are more environmentally-compatible and particularly performing, suitable for use in different types of vehicle tyres, especially in HP and UHP tyres.

In particular, the Applicant has made vulcanised elastomeric compositions comprising this natural rubber from Guayule which, compared to compositions based on natural rubber from Hevea, exhibit a higher or at least comparable tear resistance with improvement of the mechanical characteristics at break, a greater hysteresis at cold and hot, therefore a good grip on both wet and dry asphalt, and a satisfactory resistance to thermal ageing and wear, which allows the application thereof also under high performance conditions, where treads containing synthetic SBR co-polymers are typically used.

The Applicant has found that the use of a particular natural rubber from Guayule, which already contains high amounts of its resins, is particularly advantageous and environmentally sustainable, since both the rubber and the resins are of natural origin. Due to the use of this specific Guayule rubber, it is possible to minimise the initial purification step of the raw rubber and avoid the difficult subsequent step of incorporation in the elastomeric composition of other resins, in large amounts, thus simplifying the process and saving on costs and times of these steps. Finally, the Guayule rubber identified by the Applicant allows, at an even improved level of performance, replacing not only the portion of natural rubber from Hevea but also at least a part of the synthetic elastomers currently used in tyre compositions, further reducing the fossil component.

Therefore, a first aspect of the present invention is a vulcanisable elastomeric composition for tyre components comprising:
- X phr of a natural rubber from Guayule (A), wherein X is at least equal to 5 phr, wherein said rubber (A) comprises from 5 to 20% by weight of natural resins from Guayule (B), and at least 0.1 phr of at least one antioxidant (C), and

wherein said rubber (A) is characterised by Mooney viscosity of at least 40 MU, by Wallace plasticity P0 of at least 25 and by Wallace plasticity P30 of at least 10,
   - Y phr of at least one solid diene elastomeric polymer (A'),
wherein the sum of the rubber phr contained in X and of the phr Y is equal to 100 phr,
   - at least 10 phr of at least one reinforcing filler (D),
   - at least 0.05 phr of at least one vulcanising agent (E); and preferably
   - 0.5 to 10 phr of at least one activating agent for the vulcanisation (F); and/or
   - 0.05 to 10 phr of at least one accelerant for the vulcanisation (G), and/or
   - 0.05 to 2 phr of at least one retardant for the vulcanisation, and/or
   - 0.1 to 20 phr of at least one coupling agent (L).

A second aspect of the present invention consists of a component for tyre for vehicles comprising a vulcanisable elastomeric composition according to the first aspect of the invention or a vulcanised elastomeric composition obtained by vulcanisation thereof.

A third aspect of the present invention consists of a tyre for vehicles comprising at least one tyre component, preferably a tread band, according to the second aspect of the invention.

### DETAILED DESCRIPTION OF THE INVENTION

For the purposes of the present description and of the following claims, the term "phr" (parts per hundreds of rubber) means the parts by weight of a given component of the elastomeric composition by 100 parts by weight of the total elastomers. Unless otherwise indicated, all the percentages are expressed as percentages by weight.

In the present description, the term green is generally used to indicate a material, a composition, a component or a tyre not yet vulcanised.

The vulcanisable elastomeric composition for tyres according to the present invention is characterised by one or more of the following preferred aspects taken alone or in combination with one another.

The present vulcanisable elastomeric composition comprises X phr of a natural rubber from Guayule (A), wherein X is preferably at least 10 phr or 20 phr or 30 phr or 40 phr 50 phr or 60 phr or 70 phr.

The present vulcanisable elastomeric composition preferably comprises from 10 phr to 70 phr, from 15 phr to 60 phr, from 20 phr to 55 phr of natural rubber from Guayule (A).

In the present elastomeric composition, natural rubber from Guayule can not only replace any other natural rubber but also advantageously, at least in part, the synthetic elastomers such as SBR, the rubber from Guayule preferably having a glass transition temperature (Tg) comparable to that of the elastomers to be replaced.

Preferably, said Tg is between -70 and -40 °C, more preferably between -65 and - 45 °C.

The glass transition temperature Tg can be conveniently measured by using a differential scanning calorimeter (DSC) according to methods well known to those skilled in the art (ISO 22768 "Rubber, Raw - Determination of the glass transition temperatures by differential scanning calorimetry (DSC)".

Preferably, in the present elastomeric composition, the E-SBR (emulsion - styrene butadiene rubber) elastomers are at least partly substituted because generally characterised by compatible Tg and because the substitution involves a significant improvement in cold grip.

In the present description, the term "natural rubber from Guayule" means a natural rubber obtainable by extraction of rubber latex from Guayule plants and subsequent precipitation of the rubber. From the plant a latex is extracted, which contains both natural rubber and resins and other minor components such as fatty acids and proteins, to which antioxidants are added to prevent degradation thereof during subsequent processing. With a normally acidic coagulation process, of latex, the solid rubber with its own resins dispersed therein is then obtained.

Preferably, the suitable natural rubber from Guayule comprises from 8 to 16%, more preferably around 13% by weight of at least one natural resin from Guayule (B), meaning by natural resin from Guayule at least one of the resins that the Guayule plant spontaneously produces and that in the process of extraction of the latex and subsequent coagulation remain trapped in the rubber.

Natural resins from Guayule are mainly terpenic resins, more preferably terpenic resins selected from Argentatine, Guayuline A, Guayuline B, beta-phellandrene, cadinene, eudesmol and mixtures thereof.

Resins from Guayule (B) can be identified and quantified by NMR, after solvent extraction, preferably acetone. Acetone extracts contain in addition to small amounts of fatty acids, the aforesaid resins in mixture, for example in the following relative ratios (Table 1):

**Table 1**

| Resin name (B) | Relative abundance |
|---|---|
| Argentatine | 70 |
| Guayulin A | 50 |
| Guayulin B | 30 |
| Beta-Phellandrene | 6 |
| Cadinene | 5 |
| Eudesmol | 1 |

The Guayule rubber suitable for the present invention is further characterised by the Mooney viscosity and Wallace plasticity (P0 and P30), magnitudes both correlated with the molecular weight of the elastomeric chains.

Preferably, the present rubber from Guayule has a Mooney viscosity of at least 50, more preferably at least 55 (MU, Mooney unit).

Preferably, the present rubber from Guayule has a Mooney viscosity of between 40 and 75, more preferably between 50 and 70 MU.

Guayule rubbers with viscosities lower than 40 MU, in particular lower than 35 MU, are not suitable because they result in compositions with poor dynamic modulus at hot (70 °C) and with lower hardness values (insufficient reinforcement).

Preferably, the present rubber from Guayule has a plasticity P0 of at least 28, more preferably at least 30.

Preferably, the present rubber from Guayule has a plasticity P0 of between 25 and 50, more preferably between 28 and 40.

Preferably, the present rubber from Guayule has a plasticity P30 of at least 10.2.

Plasticity P30 is an index of the resistance of the material to thermal ageing. In the present invention, suitable P30 values can be imparted to the Guayule rubber by incorporating the appropriate antioxidants already in the latex prior to coagulation of the solid rubber as described below.

The Guayule rubber suitable for use in the present invention is therefore selected based on the resins content, Mooney viscosity and Wallace plasticity according to the values specified above. These characteristics will derive on the one hand from the characteristics of the Guayule plant of origin (strain, agronomic conditions, etc.) and on the other from the conditions of preparation of the rubber or the conditions of extraction of the latex and its coagulation, conditions that will contribute to selecting the content of non-rubber components, in particular the quantity and type of resins, and the molecular weight distribution of the elastomers present in the final solid rubber within the limits of the invention. A suitable process for the preparation of a Guayule rubber with the characteristics specified above is described for example in patent US 9273153 on behalf of Yulex.

An example of a commercial Guayule rubber with the characteristics specified above is the CGR20000^{®} rubber supplied by Yulex.

The natural rubber from Guayule suitable for the present invention is stabilised with at least 0.1 phr of at least one antioxidant (C).

Preferably, the natural rubber from Guayule suitable for the present invention is stabilised with at least 0.5 phr, at least 0.8 phr, at least 1 phr or at least 3 phr of at least one antioxidant (C).

Preferably, the natural rubber from Guayule suitable for the present invention is stabilised with no more than 5 phr, preferably no more than 4 phr of at least one antioxidant (C).

Preferably, the antioxidant (C) is selected from the phenolic antioxidants (C1), hydroquinones (C2) or mixtures thereof.

Preferably, the antioxidant (C) is a mixture of at least one phenolic antioxidant (C1) and at least one hydroquinone (C2) in a weight ratio from 0.5:1 to 1:0.5, more preferably about 1:1.

Preferably, the phenolic antioxidant (C1) is a bulky phenol, such as octadecyl 3,5-Di(tert)-butyl-4-hydroxyhydrocinnamate) (CAS. Reg. No. 2082-79-3) or a polymeric phenolic antioxidant such as the butyl reaction product of p-cresol and dicyclopentadiene (CAS. Reg. No. 68610-51-5).

Preferably the antioxidant is a hydroquinone compound (C2) such as for example 2.5-di(Tert-amyl)hydroquinone (CAS. Reg. No. 79-74-3) or a polymeric derivative of a hydroquinone such as polymerised 1 ,2-dihydro-2,2,4-trimethylquinoline (CAS. No. 26780-96-1).

A particularly preferred mixture of antioxidants is the mixture of poly(dicyclopentadiene-co-p-cresol) CAS 68610-51-5 (type Wingstay L) and 2,5-di(tert-amyl)hydroquinone (CAS 79-74-3).

The antioxidants incorporated into the latex and maintained in the final solid rubber protect the rubber components from oxidative and thermal degradation. The value of Wallace plasticity P30 is an index of this stabilising activity of antioxidants.

The elastomeric tyre composition according to the present invention comprises Y phr of at least one solid diene elastomeric polymer (A').

The sum of the phr of rubber contained in the natural rubber from Guayule (X) and the phr of the at least one diene elastomeric polymer (Y) is equal to 100 phr.

By "solid elastomeric polymer or solid elastomer" it is meant a natural or synthetic polymer which at room temperature can be stretched repeatedly to at least twice its original length and which, after removal of the tensile load immediately returns with force to approximately its original length (definition according to ASTM, committee E8, Philadelphia 1976).

By "diene polymer" it is meant a polymer or copolymer derived from the polymerisation of one or more different monomers, among which at least one of them is a conjugated diene (diolefin with double conjugated bonds).

Preferably, the solid diene elastomeric polymer (A') has a weight average molecular weight (*M̅w*) higher than 80000 g/mol.

Preferably, the solid diene elastomeric polymer (A') which can be used in the present invention can be selected from those commonly used in sulphur-crosslinkable elastomeric materials, which are particularly suitable for producing tyres, that is to say, from elastomeric polymers or copolymers containing double bonds in the chain characterised by a glass transition temperature (Tg) generally lower than 20 °C, preferably lower than -40°C.

These polymers or copolymers may be of natural origin or may be obtained by solution polymerization, emulsion polymerization or gas-phase polymerization of one or more conjugated diolefins, optionally mixed with at least one comonomer selected from vinyl aromatic and/or polar comonomers in an amount not exceeding 60% by weight.

The conjugated diolefins generally contain from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof.

1,3-butadiene and isoprene are particularly preferred.

Vinyl aromatic substances, which may optionally be used as comonomers, generally contain from 8 to 20, preferably from 8 to 12 carbon atoms and may be selected, for example, from: styrene; 1-vinylnaphthalene; 2-vinylnaphthalene; various alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolyl-styrene, 4- (4-phenylbutyl)styrene, or mixtures thereof. Styrene is particularly preferred.

Polar comonomers that may optionally be used, can be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile or mixtures thereof.

Preferably, the solid diene elastomeric polymer (A') which can be used in the present invention can be selected, for example, from: cis-1,4-polyisoprene (natural or synthetic), 3,4-polyisoprene, polybutadiene (BR), in particular polybutadiene with a high content of 1,4-cis, optionally halogenated isoprene/isobutene copolymers, 1,3-butadiene/acrylonitrile copolymers, styrene/1,3-butadiene copolymers (SBR), styrene/isoprene/1,3-butadiene copolymers, styrene/1,3-butadiene/acrylonitrile copolymers, or mixtures thereof.

Preferably, in the elastomeric composition, the only natural rubber present is the natural rubber from Guayule (A).

In the present composition, the solid elastomeric diene polymer (A') is a mixture of two or more polymers (A').

According to the present invention, a preferred elastomeric composition for tread comprises
- from 5 to 50 phr, preferably from 10 to 30 phr, of a natural rubber from Guayule (A),
- from 10 to 90 phr, preferably from 40 to 80 phr of SBR, and/or
- from 0 to 60 phr, preferably from 0 to 50 phr of BR, and/or
- from 0 to 70 phr, preferably from 0 to 60 phr, of NR from Hevea.

The elastomeric composition according to the invention can optionally comprise at least one elastomeric polymer (A') of one or more monoolefins with an olefinic comonomer or derivatives thereof (a'). The monoolefins can be selected from: ethylene and α-olefins generally containing from 3 to 12 carbon atoms, such as for example propylene, 1-butene, 1-pentene, 1-hexene, 1-octene or mixtures thereof. The following are preferred: copolymers selected from ethylene and an α-olefin, optionally with a diene; isobutene homopolymers or copolymers thereof with small amounts of a diene, which are optionally at least partially halogenated. The diene possibly present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene or mixtures thereof. Among them, the following are particularly preferred: ethylene/propylene (EPR) copolymers or ethylene/propylene/diene (EPDM) copolymers; polyisobutene; butyl rubber; halobutyl rubbers, in particular chlorobutyl or bromobutyl rubbers; or mixtures thereof.

The solid diene elastomeric polymer (A') may optionally be functionalised by reaction with suitable terminating agents or coupling agents.

The elastomeric composition for tyres according to the present invention preferably comprises at least 20 phr or 30 phr or 40 phr or 50 phr of at least one reinforcing filler (D).

Preferably, the composition comprises no more than 150 phr or 140 or phr or 130 phr or 120 phr or 110 phr or 100 phr of at least one reinforcing filler (D). Preferably, the composition comprises from 10 to 150 phr or from 30 to 120 phr or from 50 to 120 phr or from 70 to 110 phr or from 80 to 100 phr of at least one reinforcing filler (D).

Preferably, the reinforcing filler (D) is selected from carbon black, a white filler or mixtures thereof.

Preferably, said reinforcing filler (D) is a white filler selected from among hydroxides, oxides and hydrated oxides, salts and hydrated salts of metals, silicates fibres or mixtures thereof.

Preferably, said filler is silica-based.

Silica can interact during mixing with the optional silane coupling agent (L), added for the purpose of making the silica compatible and dispersible in the elastomeric polymer.

Preferably, said reinforcing filler (D) may also be carbon black.

Preferably, said carbon black reinforcing filler is present in the elastomeric composition in an amount ranging between 1 phr and 120 phr, preferably between about 40 phr and about 110 phr.

Preferably, the carbon black reinforcing filler is selected from those having a surface area not smaller than 20 m²/g, preferably larger than 50 m²/g (as determined by STSA - statistical thickness surface area according to ISO 18852:2005).

The carbon black is for example N234 marketed by Birla Group (India) or by Cabot Corporation.

Preferably, said reinforcing filler (D) comprises mixtures of fillers.

The final elastomeric composition for tyres according to the present invention comprises at least 0.05 phr of at least one vulcanising agent (E).

Preferably, the composition comprises at least 0.1 phr, 1 phr, 2 phr, 3 phr, 4 phr of at least one vulcanising agent (E).

Preferably, the composition comprises no more than 15 phr, 10 phr, 8 phr of at least one vulcanising agent (E).

Preferably, the composition comprises from 0.05 to 15 phr or from 0.1 to 10 phr or from 0.2 to 10 phr or from 1 to 10 phr or from 2 to 10 phr of at least one vulcanising agent (E).

Preferably, the vulcanising agent (E) is selected from among sulphur, and sulphur-containing molecules that act as sulphur donors.

Sulphur or derivatives thereof may advantageously be selected, for example, from:
(i) soluble sulphur (crystalline sulphur);
(ii) insoluble sulphur (polymeric sulphur);
(iii) sulphur dispersed in oil (for example 33% sulphur known by the trade name Crystex OT33 from Solutia);
(iv) (iv) sulphur donors such as, for example, caprolactam disulphide (CLD), bis[(trialcoxysilyl)propyl]polysulphides, dithiophosphates; or mixtures thereof.

The vulcanising agent (E) is preferably used together with adjuvants such as activators (F), accelerants (G) and/or retardants (H) for the vulcanisation known to the man skilled in the art.

Vulcanisation activators (F) that are particularly effective are zinc compounds. In particular, ZnO, ZnCO₃, zinc salts of saturated or unsaturated fatty acids containing from 8 to 18 carbon atoms, are used.

For example, zinc stearate is used, preferably formed in situ in the elastomeric composition, by ZnO and fatty acid, or magnesium stearate, formed by MgO, or mixtures thereof.

Said vulcanisation activators are preferably used in the elastomeric composition in an amount of from about 0.5 phr to about 10 phr. More preferably, said vulcanisation activators are used in the elastomeric composition in an amount of from about 1 phr to 5 phr. Even more preferably, said vulcanisation activators are used in the elastomeric composition in an amount of from about 1.5 phr to 3.5 phr.

An example of activator is the product Aktiplast ST marketed by Rheinchemie. Preferably, the elastomeric composition may further comprise at least one vulcanisation accelerant (G).

Vulcanisation accelerants that are commonly used may be for example selected from dithiocarbamates, guanidines, thioureas, thiazoles, sulphenamides, sulphenimides, thiurams, amines, xanthates, or mixtures thereof.

An example of vulcanisation accelerant is the N-cyclohexyl-2-benzothiazyl-sulfenamide Vulkacit^{®} CZ/C marketed by Lanxess.

Said vulcanisation accelerants are preferably used in the elastomeric composition in an amount of from about 0.05 phr to about 10 phr.

More preferably, said vulcanisation accelerants are used in the elastomeric composition in an amount of from about 0.1 phr to about 5 phr.

Even more preferably, said vulcanisation accelerants are used in the elastomeric composition in an amount of from about 0.5 phr to about 3 phr.

The present elastomeric composition may optionally comprise one or more vulcanisation retardants (H) such as, for example, N-cyclohexylthio phthalimide (VULKALENT G, - Lanxess).

Preferably, if present, said retardants are used in an amount of between 0.05 phr and 2 phr.

The elastomeric composition according to the invention may further comprise from 0.1 to 20 phr of a coupling agent (L).

Preferably, said coupling agent (L) is a silane coupling agent selected from those having at least one hydrolysable silane group which can be identified, for example, by the following general formula (I):

(R')₃Si-CₙH₂ₙ-X (I)

wherein the R' groups, equal or different from each other, are selected from: alkyl, alkoxy or aryloxy groups or from halogen atoms, provided that at least one of the R' groups is an alkoxy or an aryloxy group; n is an integer of between 1 and 6, ends included; X is a group selected from: nitrose, mercapto, amino, epoxide, vinyl, imide, chloro, -(S)mCnH2n-Si-(R')3 and -S-COR', wherein m and n are integers of between 1 and 6, ends included and the R' groups are as defined above. Among the silane coupling agents, bis(3-triethoxysilylpropyl)tetrasulphide and bis(3-triethoxysilylpropyl)disulphide are particularly preferred. Said coupling agents may be used as such or as a suitable mixture with an inert filler (such as carbon black) so as to facilitate their incorporation into the elastomeric composition.

Preferably, said silane coupling agent is present in the elastomeric composition in an amount ranging between about 0.1 phr and about 10 phr, preferably between about 0.5 phr and about 7 phr.

An example of the silane coupling agent is TESPT: bis(3-triethoxysilylpropyl)tetrasulphide Si69 marketed by Evonik.

The elastomeric composition may comprise other commonly used additives, selected according to the specific application for which the composition is intended, for example anti-ageing agents, anti-reversion agents, adhesives, antiozonants, waxes, fibres (such as Kevlar^{®} pulp), or mixtures thereof.

In particular, the elastomeric composition according to the invention can comprise at least one synthetic or natural resin (B') in addition to the natural resins from Guayule (B).

Preferably, the elastomeric composition according to the invention does not include any further resin (B').

If it contains it, preferably the resin (B') is present in the elastomeric composition of the invention in an amount ranging from 2 to 35 phr, preferably from 5 to 25 phr. The term "resin" is used to mean a polymer having thermoplastic or at least partially thermoplastic characteristics (as in the case of elastomeric/thermoplastic block copolymers).

Thermoplastic characteristics is used to indicate the tendency of the polymer to increase its viscosity, that is, to deform plastically when subjected to a temperature increase and/or to a sufficiently strong deformation.

The resin (B') optionally used in the elastomeric composition may be selected from hydrocarbon resins, phenolic resins, natural resins and mixtures thereof.

The hydrocarbon resin (B') may be natural (e.g. vegetable) or synthetic or derived from petroleum. In some cases, non-limiting for the invention, these resins essentially contain only hydrogen and carbon atoms.

The hydrocarbon resin (B') is selected from resins derived from coumarone-indene, styrene-indene, styrene-alkylstyrene, and aliphatic resins.

The phenolic resin (B') may be selected from among alkylphenol-formaldehyde based resins, alkylphenolic resins modified with rosin, alkylphenol-acetylene based resins, modified alkylphenolic resins and terpene-phenol based resins.

The resin (B') may be a natural terpene resin selected from the homo- or copolymers of alpha-pinene, beta-pinene, limonene, and vinyl aromatic monomers (styrene) and/or aromatic monomers (phenol), or a natural, rosin-based resin.

The elastomeric composition for tyres according to the present invention may optionally comprise at least one plasticising oil (I).

Preferably, the composition may compriss0 to 70 phr or 5 to 60 phr of at least one plasticising oil (I).

The term "plasticising oil" means a process oil derived from petroleum or a mineral oil or a vegetable oil or a synthetic oil or combinations thereof.

The plasticising oil (I) may be a process oil derived from petroleum selected from paraffins (saturated hydrocarbons), naphthenes, aromatic polycyclic and mixtures thereof.

Preferably, the plasticising oil (I) is a process oil derived from petroleum with a low aromatic content, selected for example from TDAE, TRAE, MES, paraffinic or naphthenic oils, or a synthetic oil selected from alkyl or aryl esters of phthalic acid or phosphoric acid.

More preferably, the plasticising oil (I) is an oil of natural or synthetic origin derived from the esterification of glycerol with fatty acids, comprising glycerin triglycerides, diglycerides, monoglycerides or mixtures thereof.

The elastomeric composition for tyres according to the invention can be prepared according to a conventional procedure generally comprising one or more mixing steps in conventional batch and/or continuous mixers as known to those skilled in the art.

Specific examples of batch mixers which can be advantageously used in the preparation of the composition according to the present invention are of the closed (Banbury^{®}, Intermix^{®}) or open (open mill or Z-blade) type.

Specific examples of continuous mixers which can be advantageously used are of the type with two screws or with multiple screws, co-rotating, inter-penetrating, self-cleaning or of the planetary roller extruder type.

Typically, the preparation comprises one or more non-productive steps in which all the components except those able to favour cross-linking (for example, sulphur and accelerators) are fed to the mixing device, and a production step in which the elastomeric composition obtained from the first step, as well as the components capable of favouring cross-linking, are further mixed, in the same or in another apparatus, at temperatures of the material being processed below 110 °C, preferably between 90 °C and 110 °C, so as to provide the vulcanisable elastomeric composition of the invention.

Preferably, the vulcanisable elastomeric composition at the end of the mixing steps is extruded in the form of sheet or tape.

The resulting sheet is typically subjected to a cooling treatment, generally by using water and/or forced air. The sheet thus treated is then usually placed on benches or coils awaiting further working.

The vulcanisable elastomeric composition can be fed to a device for manufacturing a component of a green tyre (semi-finished element), for example to a short cylinder extruder, a single screw extruder with hot feed or twin screw (typically with counterrotating screws), so as to obtain the tyre component, preferably a tread band.

The second aspect of the present invention is a component for tyre for vehicles comprising a vulcanisable elastomeric composition according to the first aspect of the invention (green tyre) or a vulcanised elastomeric composition obtained by vulcanisation thereof.

The tyre component according to the invention is preferably selected from among the tread, under-layer, anti-abrasive elongated element, sidewall, sidewall insert, mini-sidewall, under-liner, rubber layers, bead filler and sheet, more preferably from among the tread, under-layer and sidewall.

The third aspect of the present invention consists of a tyre for vehicles comprising at least one tyre component according to the second aspect of the invention. Preferably, the present tyre comprises at least one tyre component, preferably at least the tread, according to the invention.

Preferably, the present tyre comprises more than one tyre component according to the invention.

Preferably, the present tyre comprises at least the tread and the sidewalls according to the invention.

Preferably, the tyre according to the invention comprises
- one carcass structure comprising at least one carcass layer having opposite lateral edges associated with respective bead structures including at least one anchoring annular element and at least one bead filler;
- one belt structure comprising at least one belt layer applied in radially outer position with respect to the carcass structure;
- one tread band applied in radially outer position with respect to said belt structure; where said tread band comprises a vulcanised elastomeric composition obtained by vulcanising a final elastomeric composition obtained using the elastomeric composition according to the invention.

Preferably, the tyre according to the invention is an all season tyre.

Preferably, the tyre according to the invention is a tyre for high or very high performance (HP, UHP, SUV) vehicles.

Preferably, the tyre according to the invention is a tyre for automobiles.

The tyre according to the invention may be a tyre for heavy vehicles or motorcycles. The tyre according to the invention can be manufactured according to a process comprising:
a) producing a green tyre comprising a tread band applied to a radially outer position of the tyre;
b) subjecting said green tyre to moulding and vulcanisation in order to obtain a finished tyre,
wherein at least said tread band comprises a final elastomeric composition obtained using the elastomeric composition according to the invention.

Preferably, said green tread band comprises at least 50%, preferably at least 70% or 90% or 95% or 100% of an elastomeric composition according to the invention. Advantageously, the tyre of the invention will comprise the present elastomeric composition in multiple components, thus reducing the use of non-renewable raw materials.

### BRIEF DESCRIPTION OF THE DRAWINGS

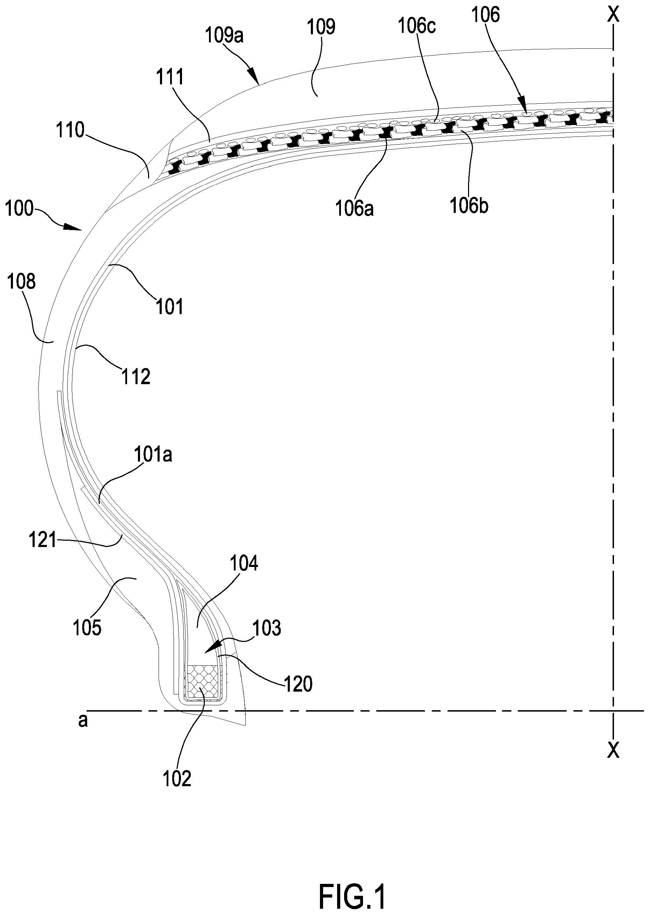

Figure 1 schematically shows a semi-sectional view of a tyre for vehicle wheels obtained according to the present invention.

### DESCRIPTION OF EXEMPLARY EMBODIMENTS OF THE INVENTION

Figure 1 shows an exemplary tyre according to the present invention.

With reference to figure 1, "a" denotes an axial direction and "x-x" trace of an equatorial plane of the tyre, indicates a radial direction. For simplicity, figure 1 shows only a portion of the tyre, the remaining portion not shown being identical and arranged symmetrically with respect to the radial direction "x-x".

Reference numeral (100) in figure 1 denotes a winter or all season tyre for vehicle wheels produced according to the process according to the invention and formed by a plurality of structural elements.

Tyre (100) for four-wheeled vehicles comprises at least one carcass structure, comprising at least one carcass layer (101) having respectively opposite end flaps engaged with respective annular anchoring structures (102), referred to as bead cores, possibly associated to a bead filler (104). The tyre area comprising the bead core (102) and the filler (104) forms a reinforcing annular structure (103), the so-called bead, intended for anchoring the tyre onto a corresponding mounting rim, not shown.

The carcass structure is usually of radial type, i.e. the reinforcing elements of the at least one carcass layer (101) lie on planes comprising the rotational axis of the tyre and substantially perpendicular to the equatorial plane of the tyre. Said reinforcing elements may consist of textile cords, such as rayon, nylon, polyester (for example polyethylene naphthalate, PEN) or metal cords. Each reinforcing annular structure is associated to the carcass structure by folding back of the opposite lateral edges of the at least one carcass layer (101) around the annular anchoring structure (102) so as to form the so-called carcass flaps (101a) as shown in Figure 1.

In one embodiment, the coupling between the carcass structure and the reinforcing annular structure can be provided by a second carcass layer (not shown in Figure 1) applied in an axially outer position with respect to the first carcass layer.

An anti-abrasive strip (105) is arranged in an outer position of each reinforcing annular structure (103). Preferably, each anti-abrasive strip (105) is arranged at least in an axially outer position to the reinforcing annular structure (103) extending at least between the sidewall (108) and the portion radially below the reinforcing annular structure (103).

Preferably, the anti-abrasive strip (105) is arranged so as to enclose the reinforcing annular structure (103) along the axially inner and outer and radially lower areas of the reinforcing annular structure (103) so as to interpose between the latter and the wheel rim when the tyre (100) is mounted to the rim.

The carcass structure is associated to a belt structure (106) comprising one or more belt layers (106a), (106b) placed in radial superposition with respect to one another and with respect to the carcass layer, having typically metallic reinforcing cords. Such reinforcing cords may have crossed orientation with respect to a direction of circumferential development of the tyre (100). By "circumferential" direction it is meant a direction generally facing in the direction of rotation of the tyre.

At least one zero-degree reinforcing layer (106c), commonly known as a "0° belt", may be applied in a radially outermost position to the belt layers (106a), (106b), which generally incorporates a plurality of metallic or textile reinforcing cords, optionally combined with one another, oriented in a substantially circumferential direction, thus forming an angle of a few degrees (such as an angle of between about 0° and 6°) with respect to the equatorial plane of the tyre, and coated with an elastomeric material.

A tread band (109) is applied in position radially outer to the belt structure (106) comprising a vulcanised elastomeric composition obtained using the elastomeric composition according to the invention according to claim 1.

Moreover, respective sidewalls (108) of elastomeric material, optionally comprising the vulcanised elastomeric composition according to the invention, are further applied in an axially outer position on the lateral surfaces of the carcass structure, each extending from one of the lateral edges of the tread (109) at the respective reinforcing annular structure (103).

In a radially outer position, the tread band (109), the composition of which is produced by the process described above, has a rolling surface (109a) intended to come into contact with the ground. In the case of tyres for use on dry track, the rolling surface is smooth as shown in figure 1. For conventional road tyres or for use on a wet or rain track, circumferential and/or transverse grooves and indentations are typically made (not shown in figure 1).

An under-layer (111) is arranged between the belt structure (106) and the tread band (109).

A strip consisting of elastomeric material (110), commonly known as "mini-sidewall", can optionally be provided in the connecting zone between the sidewalls (108) and the tread band (109), this mini-sidewall being generally obtained by co-extrusion with the tread band (109) and allowing an improvement of the mechanical interaction between the tread band (109) and the sidewalls (108). Preferably, the end portion of the sidewall (108) directly covers the lateral edge of the tread band (109). Typically, a rubber layer (112), generally known as "liner", which provides the necessary impermeability to the inflation air of the tyre, can also be provided in a radially inner position with respect to the carcass layer (101).

The reinforcing annular structure (103) of the tyre may comprise a further protective layer which is generally known by the term of "chafer" (121) or protective strip and which has the function of increasing the rigidity and integrity of the bead structure (103).

The chafer (121) usually comprises a plurality of cords incorporated in a cross-linked elastomeric material and which are generally made of textile materials (such as aramid or rayon) or of metallic materials (such as steel cords).

The rigidity of the tyre sidewall (108) can be improved by providing the reinforcing annular structure (103) with a reinforcing layer (120) generally known as "flipper" or additional strip-like insert.

The flipper (120) is a reinforcing layer which is wound around the respective anchoring annular structure (102) and the bead filler (104) so as to at least partially surround them, said reinforcing layer being arranged between the at least one carcass layer (101) and the reinforcing annular structure (103). Usually, the flipper is in contact with said at least one carcass layer (101) and said reinforcing annular structure (103).

The flipper (120) typically comprises a plurality of metallic or textile cords incorporated within a cross-linked elastomeric material.

The building of the tyre (100) as described above, can be carried out by assembling respective semi-finished products adapted to form the components of the tyre, on a forming drum, not shown, by at least one assembling device.

At least a part of the components intended to form the carcass structure of the tyre can be built and/or assembled on the forming drum. More particularly, the forming drum is intended to first receive the possible liner, and then the carcass structure. Thereafter, devices non shown coaxially engage one of the annular anchoring structures around each of the end flaps, position an outer sleeve comprising the belt structure and the tread band in a coaxially centred position around the cylindrical carcass sleeve and shape the carcass sleeve according to a toroidal configuration through a radial expansion of the carcass structure, so as to cause the application thereof against a radially inner surface of the outer sleeve.

After the building of the green tyre, a moulding and vulcanisation treatment is generally carried out in order to determine the structural stabilisation of the tyre through cross-linking of the elastomeric compositions, as well as to impart a desired tread pattern on the tread band and to impart any distinguishing graphic signs at the sidewalls.

The following examples are now provided for merely illustrative and non-limiting purposes of the present invention.

### EXAMPLES

Where not indicated otherwise, in the present experimental part the components of the compositions are expressed in phr (parts per hundreds of rubber).

The following Table 2 shows the properties of some natural rubbers (GN) from Hevea (GN-a) or from Guayule (GN-b, GN-c, GN-d) which can be used in the preparation of elastomeric compositions for treads comparative or according to the invention:

**Table 2**

| Natural rubber (A) | GN-a Comp. | GN-b Comp. | GN-c Inv. | GN-d Inv. |
|---|---|---|---|---|
| Source | Hevea | Guayule | Guayule | Guayule |

| Name | STR20CV60 | GNR13 | CGR 20000 | GNR Oxyfenol |
|---|---|---|---|---|
| Extract in acetone (%) (ISO1407) | 1.9 | 13.5 | 15 | n/a |
| Total terpene resins (%) (FTIR) | 0 | 13 | 13 | 13 |
| Anti-oxidants | no | no | (C1) 0.55phr | (C1) Oxyfenol 5 phr |
| | | | (C2) 0.55phr | |
| Mooney viscosity 100 °C ISO289 | 60 | 35 | 58 | n/a |
| P0 (ISO 2007) | 29 | 14 | 33 | 32 |
| P30 (30'/140°C) (ISO2930) | 17 | <1 | 10.5 | 11.3 |

wherein
C1 phenolic antioxidant; C2 quinone antioxidant, no: absent, na: not evaluated GN-a) natural rubber from Hevea (STR20CV60, marketed by CentroTrade GmbH, having Mooney viscosity similar to that of Guayule rubbers selected for the compositions of the invention;
GN-b) GNR13 natural rubber from Guayule supplied by the University of Ohio, containing about 13% of natural resins from Guayule, not containing anti-oxidants, obtained by coagulation of Guayule latex and drying;
GN-c) natural rubber from Guayule called CGR20000^{®}, obtained by a coagulation process of latex from Guayule, stabilised with a mixture of phenolic (C1) poly(dicyclopentadiene-co-p-cresol); CAS 68610-51-5 (Wingstay L), and quinone antioxidant (C2) 2,5-Di(tert-amyl)hydroquinone CAS 79-74-3, marketed by Yulex; GN-d) natural rubber from Guayule obtained by a coagulation process of latex from Guayule and stabilised with a degree of lignin rich in phenolic groups (C1) under the trade name Oxyfenol^{®}, supplied by i-Green.

Wallace plasticity: P0 is the value of Wallace plasticity: it is a measure of the thickness variation of a raw rubber specimen before and after application of a constant force at 100 °C for a defined time. P0 is an index of the plastic sliding of the material, in turn related to the molecular weight of the rubber elastomers and to the content of low molecular weight resins.

P30 is the value of P0 repeated after heat treatment of raw natural rubber in stove at 140 °C for 30' and represents an index of the thermo-oxidative stability of the raw material.

P0 and P30 were measured with the Wallace Rapid Plastimeter Mk V-P14 plastometer, according to the international standards ISO2007 and ISO2930, respectively.

The Wallace plastometer measures the plasticity or viscosity of unvulcanised rubbers.

The sample is obtained by passing the rubber at the open mixer until it is 1.7 mm thick. Two leaves are joined and from these the specimen is obtained with a size of 3.4 mm of thickness and diameter of 13 mm and then enclosed between two pieces of tissue paper, as defined by the international standards, before being placed between the plates of the instrument and compressed between the two circular plates maintained at a temperature of 100 °C. The sample is pre-conditioned for 15 seconds to a thickness of 1 mm. A compression force of 100N is then applied for 15 seconds. The measured final thickness of the specimen expressed in units of 0.01 mm, is the number of plasticity.

As can be seen from the values of P0 and P30 of sample GN-b, in the absence of anti-oxidants the natural rubber from Guayule degrades considerably (P30 <1).

The acetone extract according to ISO 1407 represents the percentage by weight of non-rubber components extractable with acetone, which for natural rubber from Guayule are essentially terpenic resins and other minor components such as natural antioxidants and fatty acids.

The resin content of rubbers from Guayule can be measured using FTIR.

### Example 1

### Preparation of elastomeric tread compositions for all seasons

Typical all season tread compositions were prepared , comprising natural rubber from Hevea (1A) and natural rubber from Guayule (1B and 1C).

The following Table 3 shows the complete recipes of the comparative (1A) and invention (1B, 1C) tread compositions. Composition C1 is identical to 1B except for the greater TBSS content.

**Table 3**

| Ingredient (in phr) | 1A | 1B | 1C |
|---|---|---|---|
| | Comp. | Inv. | Inv. |
| SBR1723 | 55.00 | 55.00 | 55.00 |
| BR | 25.50 | 25.50 | 25.50 |
| SBR | 18.85 | 18.85 | 18.85 |
| TESPT SI69 silane | 9.60 | 9.60 | 9.60 |
| Zeosil 1165MP silica | 120.00 | 120.00 | 120.00 |
| CGR20000 (GN-c) | -- | 23.00 | 23.00 |
| STR20CV60 (GN-a) | 20.00 | -- | -- |
| STEARIC ACID | 2.50 | 2.50 | 2.50 |
| Wax | 2.50 | 2.50 | 2.50 |
| TDAE oil | 10.50 | 10.50 | 10.50 |
| Resin | 15.00 | 15.00 | 15.00 |
| KRISTALEX F85 | 26.50 | 23.50 | 23.50 |
| Zinc oxide | 2.50 | 2.50 | 2.50 |
| TMQ | 1.50 | 1.50 | 1.50 |
| 6PPD | 2.50 | 2.50 | 2.50 |
| N115 | 9.00 | 9.00 | 9.00 |
| TBBS | 2.90 | 2.90 | 3.30 |
| Soluble sulphur | 1.63 | 1.63 | 1.63 |
| Total | 325.98 | 325.98 | 326.38 |
| Density (g/cm3) | 1.230 | 1.227 | 1.230 |

wherein
SBR1723: Europrene 1723 emulsion styrene-butadiene copolymer, extended with 27% TDAE oil, containing 23% styrene, Tg = - 54 °C (Versalis)
BR: SKD NHEODIMIO NIZHNIKAM polybutadiene cis > 97%, Neodymium catalyst, Mooney viscosity 44, Tg = - 108 °C;
SBR: functionalised styrene-butadiene copolymer: (TRINSEO) 21% styrene, 63% vinyl, Mooney viscosity 79, extended oil (30 phr TDAE) Tg = - 30.5 °C;
Silane TESPT: bis(3-triethoxysilylpropyl)tetrasulphide - Si69 (Evonik);
Silica: High dispersibility precipitated silica, tradename Zeosil 1165MP by Solvay.
Stearic acid: Undesa
Wax: Mixture of N-paraffins (Repsol)
TDAE oil: TDAE Treated Distillate Aromatic Extract Vivatec 500 (H&R);
Resin: solid hydrocarbon styrene indene resin with Tg = 43 °C by Ruetgers Chemical Gmbh
Kristalex F85: alpha methylstyrene hydrocarbon resin (Eastman)
Zinc oxide; Rhein Chemie
TMQ: 2,2,4-Trimethyl-1,2-dihydroquinoline (Lanxess)
6PPD: phenyl-p-phenylenediamine (6-PPD-Akzo Nobel)
N115: Birla carbon black
TBBS: N tert-butyl benzothiazole-2-sulphenamide by Lanxess
Soluble sulphur (Zolfo Industria)

The elastomeric tread compositions of Table 3 were prepared according to this conventional procedure comprising three successive mixes in a batch mixer (Banbury^{®}), as described herein.

Elastomers SBR, BR, CGR20000 (GN-c) or STR20CV60 (GN-a) were loaded into a 1.6 litre internal mixer (Banbury) together with silane and silica, then stearic acid, wax, TDAE oil, the styrene - indene resin, the hydrocarbon resin were fed, mixed for about 5 minutes and the material discharged at a temperature of 140-150 °C. The material from the previous step was again fed to the same internal mixer, then zinc oxide, TMQ, 6PPD and carbon black N115 were added and the mixing was continued at 75 rpm, up to the temperature of 100 °C.

Finally, the vulcanising system (TBBS and soluble sulphur) was added and the material was subjected to a final mixing at 90 °C for 3 minutes.

The elastomeric composition produced was then discharged and cooled in air at a temperature of about 25 °C.

### Example 2

### Preparation of elastomeric tread compositions

Two elastomeric tread compositions for all seasons, comparative (2A) and according to the invention (2B) were prepared and compared, the first one comprising no natural rubber and the second one comprising a natural rubber from Guayule (GN-c).

The following Table 4 shows the complete recipes of the comparative (2A) and invention (2B) tread compositions. In composition 2B, part of the SBR 1723 (oil extended with 27% of TDAE) was substituted with the natural rubber GN-c, containing 13% of natural resins, maintaining the total elastomeric content equal to 100 phr. However, since in composition 2B, reducing the amount of SBR 1723, the TDAE oil was reduced and also taking into account that GN-c supplied 3 phr of resins, in composition 2B it was compensated by adding 4.5 phr more of TDAE oil (see TDAE oil 10.5 composition 2B vs 6.0 phr composition 2A)

**Table 4**

| Ingredient (in phr) | 2A | 2B |
|---|---|---|
| SBR1723 | 82.50 | 55.00 |
| BR | 25.50 | 25.50 |
| SBR | 18.85 | 18.85 |
| TESPT SI69 silane | 9.60 | 9.60 |
| Zeosil 1165MP silica | 120.00 | 120.00 |
| CGR20000 (GN-c) | -- | 23.00 |
| STEARIC ACID | 2.50 | 2.50 |
| Wax | 2.50 | 2.50 |
| TDAE oil | 6.00 | 10.50 |
| Resin | 15.00 | 15.00 |
| KR!STALEX F85 | 23.50 | 23.50 |
| Zinc oxide | 2.50 | 2.50 |
| TMQ | 1.50 | 1.50 |
| 6PPD | 2.50 | 2.50 |
| N115 | 9.00 | 9.00 |
| TBBS | 2.90 | 2.90 |
| Soluble sulphur | 1.63 | 1.63 |
| Total | 325.98 | 325.98 |

in which the meanings of the initials and abbreviations are the same as those given in Table 3.

The elastomeric tread compositions of Table 4 were prepared according to the same procedure described for the composition of Table 3.

### Evaluation of the properties of elastomeric compositions

### Properties of non-vulcanised compositions

The vulcanisable elastomeric compositions (unvulcanised or raw) of the examples were subjected to the following evaluations:
Mooney viscosity ML (1 + 4) at 100 °C was measured according to the ISO 289-1 :2005 standard.
MDR rheometric analysis (according to the ISO 6502 standard) using an Alpha Technologies type MDR2000 rheometer, the tests were carried out at 170 °C for 20 minutes at an oscillation frequency of 1.66Hz (100 oscillations per minute) and an amplitude of oscillation of ± 0.5°, measuring the time required to reach respectively 90% (T90) and 100% (T100) of the final torque value (Mf). The maximum torque value MH and the minimum torque value ML were also measured.

### Properties of vulcanised compositions

The elastomeric compositions of the examples were subjected after vulcanisation at 170 °C for 10 min. to the following evaluations:
The static mechanical properties were measured according to the ISO 37:2005 standard at 23 °C and after thermal ageing at 70 °C for 168 hours.

In particular, the load was measured at different elongation levels (50%, 100% and 300%, named in sequence CA05 - CA - CA3), the breaking load CR, the elongation at break AR, the energy at break and the % variations of AR and Ca3 after ageing.

The tensile tests were carried out on ring specimens according to the ISO37 standard.

The dynamic mechanical properties were measured using an Instron dynamic device in traction-compression mode according to the following methods. A sample of the green elastomeric compositions of Example 1 vulcanised at 170 °C for 10 minutes having a cylindrical shape (length = 25 mm; diameter = 14 mm), pre-load compression up to 25% of the longitudinal deformation in relation to the initial length and maintained at the predetermined temperature (equal to +10 °C, +23 °C and +70 °C) for the whole duration of the test, was subjected to a dynamic sinusoidal strain having an amplitude of ±3.5% or ±7.5% in relation to the length under pre-load, with a frequency of 10 Hz.

The dynamic mechanical properties are expressed in terms of dynamic elastic modulus (E') and Tan delta (dissipation factor). The Tan delta value was calculated as a ratio of the viscous modulus (E") to the elastic modulus (E').

### Peeling test

The tear resistance properties were measured according to this internal method.

Two-layer samples were prepared to measure the adhesion strength (peeling), overlapping two layers of the same non-crosslinked elastomeric composition, and subjecting them to cross-linking (at 170 °C for 10 minutes). In detail, the samples were prepared as follows.

Each elastomeric composition was calendared so as to obtain a sheet with a thickness of 3 mm +/- 0.2 mm. From the sheet thus produced, slabs of 220 mm (+/-1.0 mm) x 220 mm (+/- 1.0 mm) x 3 mm (+/- 0.2 mm) were obtained, marking the direction of the calendaring.

One surface of each sheet was protected with a polyethylene sheet, while a rubberised polyamide reinforcing fabric with a thickness of 0.88 mm +/- 0.05 mm was applied on the opposite surface, orienting the threads in the calendaring direction and rolling the composite thus assembled so as to obtain a good adhesion between the fabric and the non-crosslinked elastomeric composition.

After cooling, from the composite thus obtained, sheets were produced by die-cutting, these sheets having dimensions equal to 110 mm (+/- 1.0 mm) x 25 mm (+/-1.0 mm) x 3.88 mm (+/- 0.05 mm), taking care to ensure that the major axis of each sheet was oriented towards the threads of the fabric.

A first sheet made of a crosslinkable elastomeric composition obtained as described above constituting the first layer was placed in a mould, the polyethylene film was removed, two Mylar^{®} strips acting as side separators (thickness = 0.2 mm) were applied laterally and a third strip of Mylar^{®} (thickness = 0.045 mm) was applied at one end of the sheet in order to create a short free stretch not adherent to the second layer.

A second sheet made of the same crosslinkable elastomeric composition described above, from which the polyethylene film was previously removed, was then applied to the first sheet thus prepared, constituting the second layer (the first layer and the second layer being made with the same crosslinkable elastomeric composition), thus obtaining a sample which was then cross-linked by heating at 170 °C for 10 minutes in a press.

Subsequently, the crosslinked samples as described above were conditioned at 100 °C +/- 2 °C) for at least 16 hours and were subjected to the peeling test using a Zwick Z005 dynamometer, whose clamps were applied to the free section of each layer. A traction speed of 260 mm/min +/- 20 mm/min was then applied and the values of the peeling force, expressed in Newton (N), were then measured as the average value calculated for the two samples.

Abrasion Volume Loss (mm³): Abrasion according to DIN53516.

The following Table 5 shows the results of the tests described above for the samples of the comparative compositions according to Examples 1A and 2A and of the invention 1B, 1C and 2B. The values of E' were recalculated considering the values obtained with the compositions of Examples 1A and 2A taken as reference, equal to 100.

**Table 5**

| | | Ex. 1A | Ex. 1B | Ex. 1C | Ex. 2A | Ex. 2B |
|---|---|---|---|---|---|---|
| | | Comp. | Inv. | Inv. | Comp. | Inv. |
| Natural rubber | | GN Hevea | GN Guayule | GN Guayule | -- | GN Guayule |

| Parameter | Unit | | | | | |
|---|---|---|---|---|---|---|
| ML | dNm | 4.61 | 4.29 | 4.18 | 3.72 | 3.50 |
| MH | dNm | 21.25 | 21.58 | 20.85 | 22.21 | 22.20 |
| T90 | min | 4.22 | 4.47 | 4.13 | 5.19 | 4.33 |
| T100 | min | 10.88 | 11.57 | 10.53 | 15.73 | 13.76 |
| CA0.5 | MPa | 1.56 | 1.52 | 1.50 | 1.56 | 1.58 |
| CA1 | MPa | 2.39 | 2.23 | 2.26 | 2.42 | 2.37 |
| CA3 | MPa | 8.41 | 7.68 | 8.08 | 8.72 | 8.08 |
| CR | MPa | 14.43 | 14.56 | 15.01 | 14.49 | 14.04 |
| AR | % | 517 | 555.31 | 540.83 | 481.29 | 515.37 |
| Energy | J/cm³ | 34.78 | 37.25 | 37.23 | 31.73 | 33.70 |
| CA0,5 ¹ | MPa | 2.05 | 1.87 | 1.88 | 1.89 | 1.88 |
| CA1¹ | MPa | 3.39 | 2.97 | 3.03 | 33.21 | 3.06 |
| CA3' | MPa | 12.73 | 11.20 | 11.54 | 12.36 | 11.18 |
| CR¹ | MPa | 15.66 | 14.98 | 15.30 | 14.97 | 15.02 |
| AR¹ | % | 396.88 | 418.39 | 415.61 | 381.38 | 419.12 |
| Energy¹ | J/cm³ | 28.97 | 29.13 | 29.49 | 26.02 | 29.45 |
| delta AR¹ | % | -23.2 | -24.7 | -23.2 | -20.7 | -18.7 |
| delta Ca3¹ | % | +51 | +46 | +43 | +41.7 | +28.0 |
| E' 10 Hz 10°C | MPa | 7.639 | 7.478 | 7.339 | 10.717 | 9.51 |
| Tan d 10Hz 10°C | | 0.349 | 0.363 | 0.358 | 0.385 | 0.390 |
| Tan d/E' 10 Hz 10°C | 1/MPa | 100 | 104 | 106.5 | 100 | 113.9 |
| E' 10Hz 23°C | MPa | 100 | 98.45 | 96.70 | 100 | 96.76 |
| Tan d 10Hz 23°C | | 0.300 | 0.325 | 0.320 | 0.333 | 0.338 |
| E' 10Hz 70°C | MPa | 100 | 100 | 97.50 | 100 | 97 |
| Tan d 10Hz 70°C | | 0.193 | 0.223 | 0.212 | 0.205 | 0.207 |
| delta E' 10 Hz | MPa | 100² | 93.10² | 93.20² | 100³ | 78.9³ |
| Abrasion⁴ | mm³ | | | | 98.8 | 90.6 |
| Peeling mean force | N | 155 | 157 | 180 | | |

| | | | | | | |
|---|---|---|---|---|---|---|
| 1 after thermal ageing 70 °C 168h; 2 delta E' (23 °C - 70 °C); delta 3 E' (10 °C-70 °C); 4 abrasion loss of volume 4 examples 1A - 1C: E' was measured as described above subjecting the sample to a sinusoidal dynamic tension having an amplitude of ± 3.5% in relation to the pre-load length; examples 2A - 2B: E' was measured as described above subjecting the sample to a sinusoidal dynamic tension having an amplitude of ± 7.5% in relation to the pre-load length. | | | | | | |

As shown in the data in Table 5, by replacing the natural rubber from Hevea and part of the alpha-methyl-styrene resin - which increases the hysteresis at low temperature and wet adhesion - of composition 1A with the corresponding amount of natural rubber from Guayule (compositions 1B and 1C), not only emphasises the wet grip indicator (greater tan d/E' ratio at 10 °C) but also the dry grip (greater tan delta at 70 °C), with a certain improvement in ageing resistance evidenced by delta AR% and delta Ca3% values (reduction of post-ageing stiffening).

This shows how the amount of resin contained in the rubber from Guayule can act as an adherence enhancer, without stiffening the composition, in particular at the low temperatures at which winter tyres typically operate or for all seasons, where instead a traditional resin such as the alpha-methyl styrene resin of example 1A, increases the stiffness by affecting the adhesion performance.

Also the resistance to tearing (peeling) of the composition according to the invention 1B is in line with the values of the comparative composition 1A, while it is definitely improved in the case of the inventive sample 1C.

Composition 1C according to the invention, in which the accelerant content has been increased, gives improved results from every point of view.

Considering instead the results of the tests of compositions 2A and 2B shown in Table 5, it can be seen that in example 2B the property of the rubber from Guayule GN-c was exploited to confer greater hysteresis both at high and at low temperatures, with decrease of cold stiffness, for the optimisation of the cold properties of a composition for all seasons 2A. The reference composition 2A contained a portion of polymer SBR1723 having a Tg comparable with the natural rubber NR (-60 °C) which is notoriously more thermoplastic or susceptible to stiffening at low temperatures.

By partially replacing the synthetic SBR1723 with the natural rubber from Guayule containing the GN-c resins, a consistent increase in the wet grip indicator was observed, i.e. an increased tan d/E' ratio 10 °C due to the significant decrease in cold stiffness (E' at 10°) without any loss of hysteresis (tan d 10 °C); in parallel, it was noted the maintenance of the tan delta at 70°, an indicator of grip on the dry, despite the reduction of synthetic SBR, low molecular weight and high mobility elastomer, characterised by high hysteresis at higher temperature.

Moreover, the variation of the mechanical properties of composition 2B with ageing is lower than the reference 2A (see delta AR and delta Ca3) as well as the difference of moduli E' between 10 and 70 °C. This trend of the properties of the elastomeric composition of the invention 2B corresponds to a lower degradation of performance which is particularly advantageous in the case of high performance tyres. The abrasion volume loss is also improved. In fact, lowest values for the compositions of the invention correspond to less material removed and therefore to a better resistance to abrasion.

### Driving tests

High performance all season tyres (PN2A and PN2B) for cars were produced, with a tread band prepared by vulcanisation of the comparative 2A and invention 2B elastomeric compositions, and subjected to driving tests.

Also in the elastomeric composition of the sidewall, Guayule GN-c rubber was used as a partial replacement of natural rubber from Hevea and hydrocarbon resins. In particular, 13.4 parts of NR from Hevea and two parts, i.e. all the synthetic resin present was replaced with the corresponding amounts of rubber from Guayule GN-c.

The front tyres were 245/45 R19 and the rear ones were 275/40 R19, with 6.0J rim and 2.2 bar inflation pressure for the front tyres and 2 bar for the rear tyres.

The tests were carried out by equipping a Maserati Ghibli car.

In particular, braking tests were performed on dry and wet roads, wet grip tests (handling or wet grip) and wear tests.

The braking test, in both dry and wet conditions, is carried out with tyres fitted to a vehicle equipped with wheel anti-blocking system (A.B.S.).

This braking test was carried out on a straight asphalt section both in dry and wet conditions, measuring the stopping distance from a predetermined initial speed, typically 100 km/h in dry conditions and 80 km/h in wet conditions.

The handling test in wet road conditions is carried out on predetermined paths, typically circuits closed to traffic. By simulating some typical manoeuvres (such as changing lanes, overtaking, slalom between skittles, entering and exiting corners) performed at a constant speed, and in acceleration and deceleration, the tyre performance is evaluated by the test driver giving a numerical evaluation of the behaviour of the latter during the above manoeuvres.

The driving test results are shown in Table 6, expressed as a percentage. Higher values are ameliorative. The behaviour on the wet is subjective, which results from the evaluation of the tester:

**Table 6**

| Driving tests | PN2A | PN2B |
|---|---|---|
| | Comp | Inv |
| Behaviour on wet | 100 | 103.6 |
| Braking on wet | 100 | 103.3 |
| Braking on dry | 100 | 100 |

As can be seen from the results shown in Table 6, the wet behaviour of tyre PN2B according to the invention is much better both for handling and in the event of braking on wet surfaces, while it appears comparable in braking on dry roads. It is particularly surprising that the composition according to the invention allows improving the performance on wet without worsening at the same time those on dry surfaces, as is generally the case.

In conclusion, natural rubbers obtained from the Guayule bush, containing their native natural resins, selected on the basis of specific chemical-physical characteristics, allow making compositions for tyre treads, preferably HP or UHP, with improved or at least comparable performance compared to tyres comprising traditional synthetic polymers from fossil source at a Tg similar to natural rubber.

## Claims

1. Vulcanisable elastomeric composition for tyre components, comprising:
- X phr of a natural rubber from Guayule (A), wherein X is at least equal to 5 phr, wherein said rubber (A) comprises from 5 to 20% by weight of natural resins from Guayule (B), and at least 0.1 phr of at least one antioxidant (C), and
wherein said rubber (A) is **characterised by** Mooney viscosity of at least 40 MU, by Wallace plasticity P0 of at least 25 and by Wallace plasticity P30 of at least 10,
- Y phr of at least one solid diene elastomeric polymer (A'),
wherein the sum of the rubber phr contained in X and of the phr Y is equal to 100 phr,
- at least 10 phr of at least one reinforcing filler (D),
- at least 0.05 phr of at least one vulcanising agent (E).

2. The composition of claim1 further comprising:
- 0.5 to 10 phr of at least one activating agent for the vulcanisation (F) or
- 0.05 to 10 phr of at least one accelerant for the vulcanisation (G).

3. The composition of claim1 further comprising 0.05 to 2 phr of at least one retardant for the vulcanisation.

4. The composition of claim1 further comprising 0.1 to 20 phr of at least one coupling agent (L).

5. Composition as claimed in any one of the preceding claims, wherein X is preferably at least 10 phr or 20 phr.

6. Composition as claimed in any one of the preceding claims, wherein said rubber (A) comprises 8% to 16%, more preferably about 13% by weight of at least one natural resin from Guayule (B).

7. Composition as claimed in any one of the preceding claims, wherein said rubber (A) is **characterised by** Mooney viscosity of between 40 and 75, preferably between 50 and 70 MU.

8. Composition as claimed in any one of the preceding claims, wherein said rubber (A) is **characterised by** Wallace P0 plasticity of at least 28 and/or P30 plasticity of at least 10.2.

9. Composition as claimed in any one of the preceding claims, wherein said rubber (A) comprises at least 0.5 phr or at least 0.8 phr of at least one antioxidant (C).

10. Composition as claimed in any one of the preceding claims, wherein said antioxidant (C) is a mixture of at least one phenolic antioxidant (C1) and at least one hydroquinone antioxidant (C2).

11. Component of a tyre for vehicles comprising a vulcanisable elastomeric composition as claimed in any one of claims 1 to 10 or a vulcanised elastomeric composition obtained by vulcanisation thereof.

12. Tyre component as claimed in claim 11, selected from tread band, under-layer and sidewall, it preferably being a tread band.

13. Tyre for vehicle wheels comprising at least one tyre component as claimed in claims 11 or 12.

14. Tyre as claimed in claim 13, wherein said component is a tread band.

## Patentansprüche

1. Vulkanisierbare Elastomerzusammensetzung für Reifenkomponenten, umfassend:
- X phr eines natürlichen Kautschuks aus Guayule (A), wobei X zumindest gleich 5 phr ist,
wobei der Kautschuk (A) von 5 bis 20 Gew.-% natürliche Harze aus Guayule (B) und zumindest 0,1 phr von zumindest einem Antioxidans (C) umfasst, und
wobei der Kautschuk (A) durch eine Mooney-Viskosität von zumindest 40 MU, durch eine Wallace-Plastizität P0 von zumindest 25 und durch eine Wallace-Plastizität P30 von zumindest 10 gekennzeichnet ist,
- Y phr zumindest eines Dien-Elastomerpolymers (A') als Feststoff,
wobei die Summe der Kautschuk-phr, die in X enthalten ist, und der phr Y gleich 100 phr ist,
- zumindest 10 phr zumindest eines verstärkenden Füllstoffes (D),
- zumindest 0,05 phr zumindest eines Vulkanisationsmittels (E) .

2. Zusammensetzung nach Anspruch 1, ferner umfassend:
- 0,5 bis 10 phr zumindest eines Aktivators für die Vulkanisierung (F), oder
- 0,05 bis 10 phr zumindest eines Beschleunigers für die Vulkanisierung (G).

3. Zusammensetzung nach Anspruch 1, ferner umfassend 0,05 bis 2 phr zumindest eines Verzögerers für die Vulkanisierung.

4. Zusammensetzung nach Anspruch 1, ferner umfassend 0,1 bis 20 phr von zumindest einem Haftvermittler (L).

5. Zusammensetzung nach einem der vorhergehenden Ansprüche, wobei X vorzugsweise zumindest 10 phr oder 20 phr ist.

6. Zusammensetzung nach einem der vorhergehenden Ansprüche, wobei der Kautschuk (A) 8 % bis 16 %, noch bevorzugter etwa 13 %, nach Gewicht von zumindest einem natürlichen Harz aus der Guayule (B) umfasst.

7. Zusammensetzung nach einem der vorhergehenden Ansprüche, wobei der Kautschuk (A) durch eine Mooney-Viskositöt von zwischen 40 und 75, vorzugsweise zwischen 50 und 70 MU gekennzeichnet ist.

8. Zusammensetzung nach einem der vorhergehenden Ansprüche, wobei der Kautschuk (A) durch eine Wallace-Plastizität P0 von zumindest 28 und/oder eine P30-Plastizität von zumindest 10,2 gekennzeichnet ist.

9. Zusammensetzung nach einem der vorhergehenden Ansprüche, wobei der Kautschuk (A) zumindest 0,5 phr oder zumindest 0,8 phr von zumindest einem Antioxidans (C) umfasst.

10. Zusammensetzung nach einem der vorhergehenden Ansprüche, wobei das Antioxidans (C) eine Mischung von zumindest einem phenolischen Antioxidans (C1) und zumindest einem Hydroquinon-Antioxidans (C2) ist.

11. Komponente eines Reifens für Fahrzeuge, umfassend eine vulkanisierbare Elastomerzusammensetzung nach einem der Ansprüche 1 bis 10, oder eine vulkanisierte Elastomerzusammensetzung, die durch Vulkanisierung derselben erhalten wird.

12. Reifenkomponente nach Anspruch 11, ausgewählt aus Laufflächenring, Unterlage und Seitenwand, wobei es sich vorzugsweise um einen Laufflächenring handelt.

13. Reifen für Fahrzeugräder, umfassend zumindest eine Reifenkomponente nach Anspruch 11 oder 12.

14. Reifenkomponente nach Anspruch 13, wobei die Komponente ein Laufflächenring ist.

## Revendications

1. Composition élastomère vulcanisable pour composants de pneu, comprenant :
- X phr d'un caoutchouc naturel de Guayule (A), dans laquelle X est au moins égal à 5 phr, dans laquelle ledit caoutchouc (A) comprend 5 à 20% en poids de résines naturelles de Guayule (B), et au moins 0,1 phr d'au moins un antioxydant (C), et
dans laquelle ledit caoutchouc (A) est **caractérisé par** une viscosité Mooney d'au moins 40 MU, par une plasticité Wallace P0 d'au moins 25 et par une plasticité Wallace P30 d'au moins 10,
- Y phr d'au moins un polymère élastomère diénique solide (A'),
dans laquelle la somme du phr de caoutchouc contenu dans X et du phr Y est égale à 100 phr,
- au moins 10 phr d'au moins une charge de renforcement (D),
- au moins 0,05 phr d'au moins un agent de vulcanisation (E).

2. Composition de la revendication 1 comprenant en outre :
- 0,5 à 10 phr d'au moins un agent d'activation pour la vulcanisation (F) ou
- 0,05 à 10 phr d'au moins un accélérateur pour la vulcanisation (C).

3. Composition de la revendication 1, comprenant en outre 0,05 à 2 phr d'au moins un retardateur pour la vulcanisation.

4. Composition de la revendication 1, comprenant en outre 0,1 à 20 phr, d'au moins un agent de couplage (L).

5. Composition telle que revendiquée dans l'une quelconque des revendications précédentes, dans laquelle X est de préférence d'au moins 10 phr ou 20 phr.

6. Composition telle que revendiquée dans l'une quelconque des revendications précédentes, dans laquelle ledit caoutchouc (A) comprend 8% à 16%, plus préférablement environ 13% en poids d'au moins une résine naturelle de Guayule (B).

7. Composition telle que revendiquée dans l'une quelconque des revendications précédentes, dans laquelle ledit caoutchouc (A) est **caractérisé par** une viscosité Mooney comprise entre 40 et 75, de préférence entre 50 et 70 MU.

8. Composition telle que revendiquée dans l'une quelconque des revendications précédentes, dans laquelle ledit caoutchouc (A) est **caractérisé par** une plasticité Wallace P0 d'au moins 28 et/ou une plasticité P30 d'au moins 10,2.

9. Composition telle que revendiquée dans l'une quelconque des revendications précédentes, dans laquelle ledit caoutchouc (A) comprend au moins 0,5 phr ou au moins 0,8 phr d'au moins un antioxydant (C).

10. Composition telle que revendiquée dans l'une quelconque des revendications précédentes, dans laquelle ledit antioxydant (C) est un mélange d'au moins un antioxydant phénolique (C1) et d'au moins un antioxydant hydroquinone (C2).

11. Composant d'un pneu pour véhicules comprenant une composition élastomère vulcanisable telle que revendiquée dans l'une quelconque des revendications 1 à 10 ou une composition élastomère vulcanisée obtenue par vulcanisation de celle-ci.

12. Composant de pneu tel que revendiqué dans la revendication 11, choisi parmi une bande de roulement, une sous-couche et un flanc, il est de préférence une bande de roulement.

13. Pneu pour roues de véhicule comprenant au moins un composant de pneu tel que revendiqué dans la revendication 11 ou 12.

14. Pneu tel que revendiqué dans la revendication 13, dans lequel ledit composant est une bande de roulement.
